Europäisches Patentamt

European Patent Office

Office européen des brevets

(19)

(11) Numéro de publication : **0 327 440 B1**

(12) # FASCICULE DE BREVET EUROPEEN

(45) Date de publication du fascicule du brevet :
20.03.91 Bulletin 91/12

(51) Int. Cl.⁵ : **F28F 9/04, F16L 37/08**

(21) Numéro de dépôt : 89400259.1

(22) Date de dépôt : 31.01.89

(54) **Dispositif d'assemblage pour un ensemble échangeur de chaleur/raccord tubulaire.**

(30) Priorité : 02.02.88 FR 8801186

(43) Date de publication de la demande :
09.08.89 Bulletin 89/32

(45) Mention de la délivrance du brevet :
20.03.91 Bulletin 91/12

(84) Etats contractants désignés :
BE DE ES GB IT LU NL SE

(56) Documents cités :
FR-A- 1 503 444
FR-A- 1 565 562
FR-A- 2 249 299

(73) Titulaire : HUTCHINSON
2 rue Balzac
F-75008 Paris (FR)

(72) Inventeur : Briet, Gilles
Le Petit Vallot Neuvy Grandchamp
D-71130 Gueugnon (FR)

(74) Mandataire : Ores, Irène et al
CABINET ORES 6, Avenue de Messine
F-75008 Paris (FR)

EP 0 327 440 B1

Jouve, 18, rue Saint-Denis, 75001 PARIS

## Description

La présente invention, à laquelle a participé la Société **VALEO**, est relative à un dispositif d'assemblage pour un ensemble échangeur de chaleur/raccord tubulaire, dans lequel le raccord tubulaire débouche dans une tubulure d'une boîte à eau de l'échangeur et est solidarisé à la tubulure par une liaison élastique facilement démontable.

On a déjà réalisé des dispositifs d'assemblage en matière plastique, du type précité, qui puissent être montés et démontés facilement.

En particulier, la Demande de Brevet FR-A-2 249 299 propose de réaliser le raccord tubulaire, destiné à être relié à un tuyau souple, de manière à être emprisonné élastiquement dans la tubulure de la boîte à eau. A cet effet, le raccord comporte une gorge annulaire qui présente une surface d'approche tronconique et dans laquelle s'engage élastiquement un épaulement annulaire interne de la tubulure. Une bague d'étanchéité est comprimée entre cet épaulement interne de la tubulure et un épaulement externe du raccord tubulaire.

Toutefois, cette solution de l'Art antérieur, bien qu'elle assure un montage rapide du raccord à la boîte à eau de l'échangeur, ne permet pas le démontage du raccord.

La présente invention a donc pour but de pourvoir à un dispositif d'assemblage échangeur de chaleur/raccord tubulaire qui, tout en permettant un montage aisé, autorise également un démontage rapide.

La présente invention a pour objet un dispositif d'assemblage échangeur de chaleur/raccord tubulaire, dans lequel le raccord tubulaire, débouchant dans une tubulure d'une boîte à eau de l'échangeur, est solidarisé d'une part à un tuyau souple par une liaison fixe et, d'autre part, à la tubulure par une liaison élastique, constituée par la coopération entre une gorge annulaire, qui est ménagée dans le raccord, et un épaulement annulaire interne ménagé dans la tubulure et destiné à s'engager élastiquement dans cette gorge, l'étanchéité étant assurée par une bague élastomère destinée à être comprimée radialement entre la tubulure et le raccord, lequel dispositif d'assemblage est caractérisé :

– en ce que ladite gorge est délimitée, au niveau de l'extrémité d'entrée du raccord tubulaire, par un bourrelet d'encliquetage (avec l'épaulement interne de la tubulure) qui est discontinu et constitué par des dents d'encliquetage qui sont espacées uniformément sur toute la circonférence de l'extrémité d'entrée précitée,

– en ce que les portions de la gorge qui ne sont pas délimitées par les dents d'encliquetage sont séparées de celles qui en comportent par des fentes axiales s'étendant, à partir de l'extrémité d'entrée du raccord, sensiblement sur toute la longueur de la gorge, en sorte que l'extrémité du raccord est divisée en une pluralité de pattes axiales, qui sont élastiques dans la direction radiale et qui comportent lesdites dents d'encliquetage, ainsi qu'en une pluralité de portions cylindriques de guidage du raccord dans la tubulure,

– en ce que ledit épaulement annulaire interne de la tubulure est lui aussi discontinu, comme ledit bourrelet d'encliquetage, et comporte une première pluralité d'encoches axiales ainsi qu'une deuxième pluralité d'encoches axiales, chaque encoche de la première pluralité étant :

• destinée au passage de chaque patte avec sa dent d'encliquetage, lors de l'assemblage du raccord dans la tubulure,

• comprise entre deux encoches de la deuxième pluralité,

• séparée de ces dernières par des portions d'épaulement saillantes, sur lesquelles glissent lesdites portions cylindriques du raccord tubulaire, tandis que chaque encoche de la deuxième pluralité permet de libérer la patte correspondante, et donc de désassembler le raccord de la tubulure, par rotation de ce raccord visant à porter les pattes d'une position de verrouillage – dans laquelle elles sont alignées avec lesdites encoches de la première pluralité – à une position de déverrouillage, dans laquelle elles sont alignées avec lesdites encoches de la deuxième pluralité.

Selon un mode de réalisation préféré du dispositif conforme à l'invention, les dents d'encliquetage présentent une surface d'approche cylindrique et les encoches de la première pluralité présentent un fond à surface tronconique, tandis que les encoches de la deuxième pluralité présentent un fond à surface cylindrique.

Selon un autre mode de réalisation avantageux du dispositif conforme à l'invention, les dents d'encliquetage présentent une surface d'approche tronconique et les encoches de la première pluralité présentent un fond à surface cylindrique, comme les encoches de la deuxième pluralité.

Selon un autre mode de réalisation préféré du dispositif conforme à l'invention, la dent d'au moins une patte élastique est emprisonnée, en position de verrouillage, entre deux nervures radiales de blocage, et comporte sur sa surface d'encliquetage radiale un chanfrein de libération de la dent, lors du passage de la position de verrouillage à la position de déverrouillage.

Selon une variante avantageuse de ce mode de réalisation, la dent d'au moins une patte élastique présente une surface d'encliquetage axiale sous forme de V saillant, qui s'encliquète dans une encoche également axiale, sous forme de V rentrant, ménagée dans l'épaulement interne de la tubulure.

Selon un autre mode de réalisation avantageux du dispositif conforme à l'invention, sur le bord d'entrée de la tubulure ou du raccord est ménagée une encoche transversale, délimitée par une surface radiale et une première et une deuxième surfaces axiales, et un doigt axial d'indexage est porté par le raccord tubulaire ou la tubulure, laquelle encoche et lequel doigt sont disposés de façon telle que, lorsque le doigt vient en butée contre une surface axiale de l'encoche transversale précitée, le raccord est dans sa position de déverrouillage, tandis que lorsque le doigt vient en butée contre l'autre surface axiale de l'encoche transversale, le raccord est dans sa position de verrouillage.

L'invention sera mieux comprise à l'aide du complément de description qui va suivre, qui se réfère aux dessins annexés dans lesquels :

   – la figure 1 est une vue de dessus, partiellement en coupe, de la boîte à eau d'un échangeur assemblée avec un raccord tubulaire,

   – la figure 2 est une vue suivant II de l'assemblage illustré à la figure 1 (cette figure 1 est en fait une coupe de la figure 2 suivant I),

   – la figure 3 est une vue en perspective montrant la tubulure de la boîte à eau et le raccord tubulaire séparés et alignés axialement,

   – la figure 4 est une vue de détail montrant un système d'indexage de l'assemblage,

   – les figures 5 à 7 correspondent à une variante de réalisation par rapport à la solution illustrée aux figures 1 à 3 ; de façon plus précise :

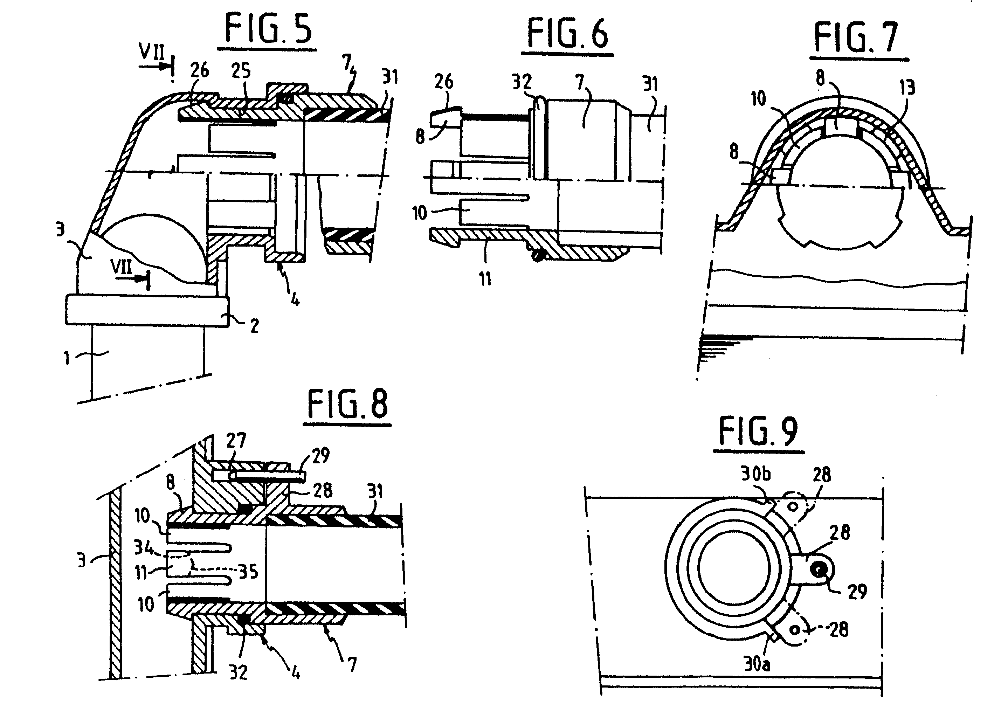

      • la figure 5 est une vue de dessus de la boîte à eau avec coupe partielle de la variante d'assemblage entre tubulure et raccord tubulaire,

      • la figure 6 est une vue en demi-élévation latérale et en demi-coupe du seul raccord tubulaire utilisé dans l'assemblage de la figure 5,

      • la figure 7 est une vue en coupe suivant VII,

   – les figures 8 et 9 montent une variante de réalisation du moyen d'indexage de l'assemblage entre tubulure et raccord.

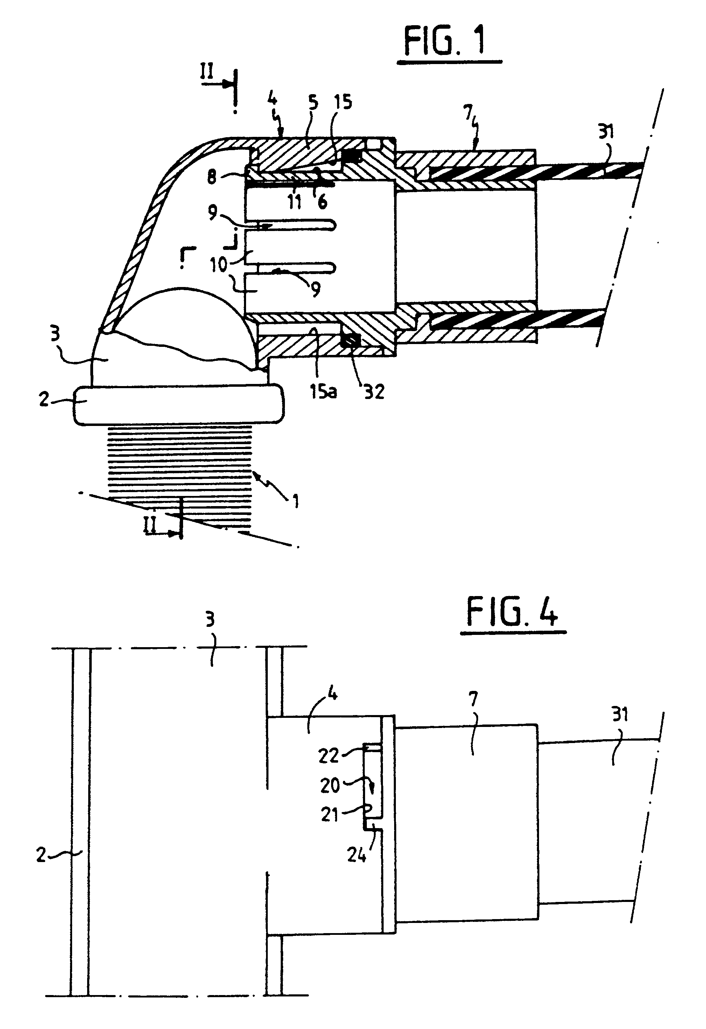

La référence numérique 1 de la figure 1 représente schématiquement le faisceau d'un échangeur de chaleur pour véhicule automobile, tandis que la référence 2 indique le collecteur reliant la boîte à eau 3 de l'échangeur aux tubes de celui-ci (non représentés).

La boîte à eau est équipée d'une tubulure 4 pourvue d'un épaulement annulaire intérieur 5 destiné à s'emboîter dans une gorge 6 d'un raccord tubulaire 7 relié à un tuyau souple 31, du type dit durit, réalisé à base d'élastomère.

Cette gorge 6 est délimitée au niveau de l'extrémité d'entrée du raccord 7 dans la tubulure 4 par un bourrelet discontinu constitué par des dents d'encliquetage 8 venant en appui contre l'épaulement 5 de la tubulure et espacées uniformément sur toute la circonférence de l'extrémité d'entrée du raccord.

Des fentes axiales 9 séparent des portions cylindriques 10 de l'extrémité du raccord 7 dépourvues de dents d'encliquetage par rapport à des portions 11 qui en comportent et qui constituent des pattes axiales élastiques radialement.

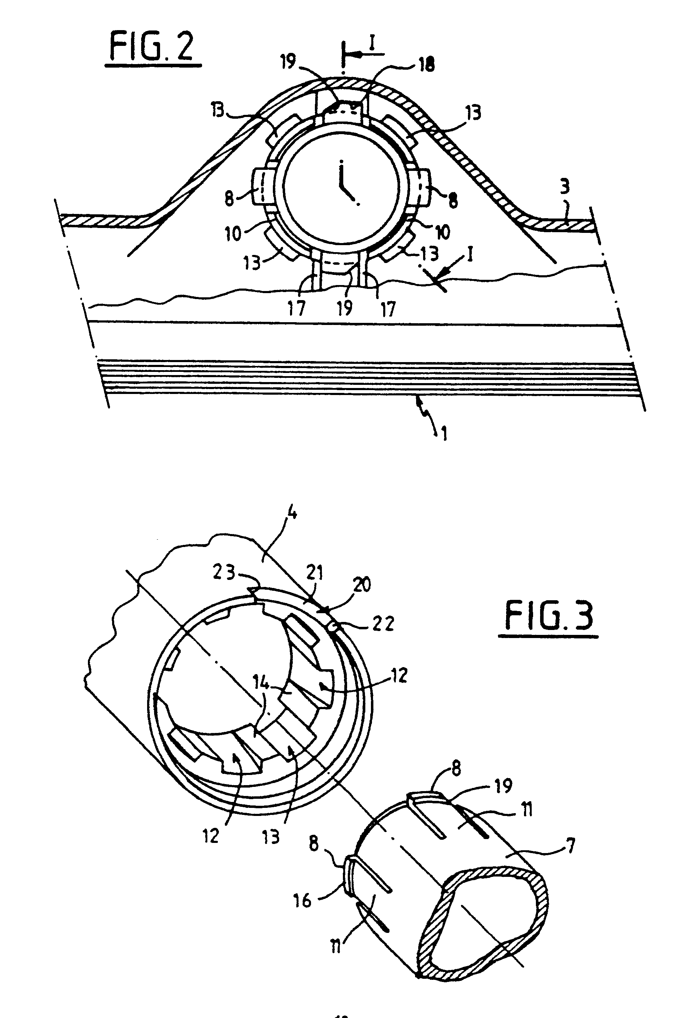

L'épaulement annulaire 5 de la tubulure comporte une première pluralité d'encoches 12 (cf. les figures 2 et 3) destinées au passage des pattes 11 et de leurs dents 8 d'encliquetage pour porter le raccord 7 dans sa position de verrouillage.

Une deuxième pluralité d'encoches 13 est destinée au passage des pattes 11 et de leurs dents 8 pour libérer le raccord 7, lorsque ces pattes sont portées en alignement avec les encoches 13 (donc dans une position de déverrouillage) par rotation du raccord à partir de la position de verrouillage précitée dans laquelle les pattes sont alignées avec les encoches 12 (on peut appeler les encoches 12 "encoches d'entrée" et les encoches 13 "encoches de sortie").

On peut remarquer (cf. la figure 3 en particulier) que chaque encoche 12 est comprise entre deux encoches 13, par rapport auxquelles elle est séparée par deux portions 14 de l'épaulement 5. Les portions cylindriques 10 du raccord 7 glissent le long de ces portions 14, qui constituent donc des moyens de guidage du raccord.

Pour permettre la pénétration des dents d'encliquetage 8 dans la tubulure 4, les encoches d'entrée 12 présentent une surface tronconique 15, ce qui permet de réaliser les dents 8 avec une surface d'approche cylindrique 16.

Le fond des encoches de sortie 13 présente une surface cylindrique 15a, car pour libérer les dents d'encliquetage il suffit de donner aux encoches 13 une profondeur sensiblement égale à l'épaisseur radiale des dents 8.

La profondeur des encoches d'entrée 12 est décroissante vers l'intérieur de la tubulure 4.

La figure 2 montre que, pour éviter toute rotation indésirée du raccord après son montage, deux dents 8 diamétralement opposées sont emprisonnées, en position de verrouillage, entre deux nervures radiales de blocage 17, solidaires de l'épaulement 5 de la tubulure 4. Pour pouvoir libérer, par rotation du raccord 7, ces dents des nervures 17, chaque dent comporte sur un côté de sa surface d'encliquetage radiale 18 un chanfrein 19.

D'après ce qui précède, il est donc clair que pour verrouiller le raccord 7 il faut que les pattes élastiques 11 soient en face des encoches d'entrée 12, de manière à éviter qu'elles butent contre les portions d'épaulement 14.

De même, pour déverrouiller le raccord, il est impératif que les dents d'encliquetage 8, et donc les pattes 11 qui les portent, soient en face des encoches de sortie 13.

A cet effet, il est utile de réaliser un moyen d'indexage comme celui illustré à la figure 4 (voir aussi la figure 3). On peut y remarquer la présence d'une encoche transversale 20, ménagée sur la tubulure 4 et délimitée par une surface radiale 21 et deux surfaces axiales 22 et 23, ainsi qu'un doigt d'indexage 24 porté par le raccord 7.

L'emplacement de ce doigt 24 et de l'encoche 20 sont choisis de façon telle que, lorsqu'au moins une dent 8 présente un chanfrein, comme celui représenté à la figure 2, (à savoir, disposé sur un seul côté de sa surface d'encliquetage radiale 18 et défini par la référence numérique 19), en position de déverrouillage, le doigt 24 vient en butée contre la surface axiale 22 de l'encoche 20 (les dents 8 sont alignées avec les encoches de sortie 13) ; tandis que, en position de verrouillage, le doigt 24 vient en butée contre la surface axiale 23 de l'encoche 20 (les dents 8 sont alignées avec les encoches d'entrée 12).

Bien entendu, les positions du doigt d'indexage 24 et de l'encoche 20 peuvent être inversées, en ce sens que l'encoche peut être ménagée sur le raccord et le doigt d'indexage peut être porté par la tubulure.

Aux figures 5 à 7 sont représentées des variantes de réalisation des dents 8 et des encoches d'entrée 12 par rapport aux figures 1 à 3.

On peut remarquer que les encoches d'entrée 12 ne présentent pas un fond à surface tronconique, mais un fond à surface cylindrique 25, ce qui oblige à réaliser les dents 8 avec une surface d'approche tronconique 26, au lieu de la surface d'approche cylindrique 16 de la figure 1.

Etant donné qu'également les encoches de sortie 13 présentent un fond à surface cylindrique, les deux types d'encoches dans les figures 5 et 7 diffèrent quant à leur profondeur, celle-ci étant moindre pour les encoches d'entrée de façon à obtenir leur pénétration forcée dans la tubulure 4 grâce à l'existence de la surface d'approche tronconique 26 des dents 8.

Une variante de réalisation du moyen d'indexage, par rapport à celui représenté à la figure 4, est représenté à la figure 8 qui est une coupe partielle, suivant le plan VIII, de la figure 5. On peut remarquer la présence d'un bossage 27 solidaire de la tubulaire 4 et d'un ergot 28 de support d'un doigt d'indexage amovible 29. Ce doigt 29 est porté par l'ergot 28 et vient se loger dans le bossage 27. L'emplacement de ce dernier et de l'ergot 28 sont choisis de telle manière, que lorsque le doigt 29 est enfilé dans le bossage 27 (et donc aligné axialement avec l'ergot) le raccord 7 est verrouillé (les dents 8 sont encliquetées avec l'épaulement 5). Lorsqu'on enlève le doigt 29 de l'ergot 28 et le retire du bossage 27, la position de déverrouillage du raccord 7 peut être repérée par un système analogue à celui illustré à la figure 4, à savoir en tournant le raccord 7 jusqu'à le faire venir en butée contre l'une ou l'autre de deux saillies radiales 30a, 30b de la tubulure 4 (cf. la figure schématique 9).

Cela signifie que, lorsque l'ergot 28 est bloqué sur le bossage 27 par le doigt 29 (ce qui correspond à la position intermédiaire de la figure 9) le raccord est verrouillé, tandis que lorsque l'ergot (qui est solidaire du raccord) se trouve dans l'une des deux positions, inférieure ou supérieure (représentées en pointillé sur la figure 9) le raccord est en position de déverrouillage : ces deux positions sont situées de part et d'autre par rapport à la position intermédiaire de verrouillage.

La figure 8 permet d'apprécier une variante de réalisation du moyen de blocage des dents d'encliquetage qui diffère de la combinaison des nervures radiales 17 avec le chanfrein 19 de la figure 2. Il s'agit de la combinaison entre une surface d'encliquetage axiale 34, en V saillant, de la dent 8, qui s'encliquète dans une encoche axiale 35, en V rentrant, de l'épaulement interne 5 de la tubulure 4, ces surfaces en V étant représentées en pointillé. Dans ce cas, la dent présente donc deux chanfreins définis par les deux côtés du V saillant et, en position de déverrouillage de l'assemblage tubulure/raccord, le doigt d'indexage 24 du dispositif d'indexage précité vient en butée contre l'une ou l'autre des surfaces axiales 22 ou 23 de l'encoche 20 ; tandis que, en position de verrouillage, le doigt 24 se trouve au milieu de l'encoche 20.

Dans chaque solution, l'étanchéité est obtenue par une bague élastomère 32 disposée entre l'épaulement interne de la tubulure et un épaulement externe 33 du raccord et comprimée radialement entre la tubulure et le raccord, lorsque celui-ci est verrouillé.

Ainsi que cela ressort de ce qui précède, l'invention ne se limite nullement à ceux de ses modes de réalisation et d'application qui viennent d'être décrits de façon plus explicite ; elle en embrasse, au contraire, toutes les variantes qui peuvent venir à l'esprit du technicien en la matière, sans s'écarter du cadre, ni de la portée, de la présente invention. En particulier, il y a lieu de souligner que, en ce qui concerne la fixation du raccord tubulaire en matière plastique au tuyau souple élastomère, celle-ci peut être obtenue non seulement par emprisonnement de l'extrémité du tuyau entre le raccord et un surmoulage en matière plastique (comme illustré à la figure 1) ou par adhérisation (surmoulage direct) du raccord en matière plastique sur le tuyau élastomère (comme illustré aux figures 5, 6 et 8), mais aussi par sertissage d'une bague métallique appliquée autour du tuyau ou par simple collage ou par tout autre moyen équivalent.

## Revendications

1. Dispositif d'assemblage échangeur de chaleur/raccord tubulaire, dans lequel le raccord tubulaire (7), débouchant dans une tubulure (4) d'une boîte à eau (3) de l'échangeur, est solidarisé d'une part à un tuyau souple (31) par une liaison fixe, et

d'autre part, à la tubulure (4) par une liaison élastique, constituée par la coopération entre une gorge annulaire (6), qui est ménagée dans le raccord (7), et un épaulement annulaire interne (5) ménagé dans la tubulure (4) et destiné à s'engager élastiquement dans cette gorge (6), l'étanchéité étant assurée par une bague élastomère (32) destinée à être comprimée radialement entre la tubulure (4) et le raccord (7), lequel dispositif d'assemblage est caractérisé :

— en ce que ladite gorge (6) est délimitée, au niveau de l'extrémité d'entrée du raccord tubulaire (7), par un bourrelet d'encliquetage (8-8-8...) (avec l'épaulement interne de la tubulure) qui est discontinu et constitué par des dents d'encliquetage (8) qui sont espacées uniformément sur toute la circonférence de l'extrémité d'entrée précitée,

— en ce que les portions (10) de la gorge (6) qui ne sont pas délimitées par les dents d'encliquetage (8) sont séparées de celles qui en comportent par des fentes axiales (9) s'étendant, à partir de l'extrémité d'entrée du raccord (7), sensiblement sur toute la longueur de la gorge (6), en sorte que l'extrémité du raccord (7) est divisée en une pluralité de pattes axiales (11), qui sont élastiques dans la direction radiale et qui comportent lesdites dents d'encliquetage (8), ainsi qu'en une pluralité de portions cylindriques (10) de guidage du raccord (7) dans la tubulure (4),

— en ce que ledit épaulement annulaire interne (5) de la tubulure (4) est lui aussi discontinu, comme ledit bourrelet (8-8-8...) d'encliquetage, et comporte une première pluralité d'encoches axiales (12) ainsi qu'une deuxième pluralité d'encoches axiales (13), chaque encoche (12) de la première pluralité étant :

• destinée au passage de chaque patte (11) avec sa dent d'encliquetage (8), lors de l'assemblage du raccord (7) dans la tubulure (4),

• comprise entre deux encoches (13) de la deuxième pluralité,

• séparée de ces dernières (13) par des portions d'épaulement (14) saillantes sur lesquelles glissent lesdites portions cylindriques (10) du raccord tubulaire (7),

tandis que chaque encoche (13) de la deuxième pluralité permet de libérer la patte correspondante (11) et donc de désassembler le raccord (7) de la tubulure (4), par rotation de ce raccord visant à porter les pattes (11) d'une position de verrouillage – dans laquelle elles sont alignées avec lesdites encoches (12) de la première pluralité – à une position de déverrouillage, dans laquelle elles sont alignées avec lesdites encoches (13) de la deuxième pluralité.

2. Dispositif selon la revendication 1, caractérisé en ce que les dents d'encliquetage (8) présentent une surface d'approche cylindrique (16) et les encoches (12) de la première pluralité présentent un fond à surface tronconique (15), tandis que les encoches (13) de la deuxième pluralité présentent un fond à surface cylindrique (15a).

3. Dispositif selon la revendication 1, caractérisé en ce que les dents d'encliquetage (8) présentent une surface d'approche tronconique (26) et les encoches (12) de la première pluralité présentent un fond à surface cylindrique (15a), comme les encoches (13) de la deuxième pluralité.

4. Dispositif selon l'une quelconque des revendications 1 ou 2, caractérisé en ce que la dent (8) d'au moins une patte élastique (11) est emprisonnée, en position de verrouillage, entre deux nervures radiales (17) de blocage, et en ce que ladite dent (8) comporte sur un côté de sa surface d'encliquetage radiale (18) un chanfrein (19) de libération de la dent (8), lors du passage de la position de verrouillage à la position de déverrouillage.

5. Dispositif selon l'une quelconque des revendications 1 ou 2, caractérisé en ce que la dent (8) d'au moins une patte élastique (11) présente une surface d'encliquetage axiale (34) sous forme de V saillant, qui s'encliquète dans une encoche (35) également axiale sous forme de V rentrant ménagée dans l'épaulement (5) interne de la tubulure (4).

6. Dispositif selon la revendication 4, caractérisé en ce que sur le bord d'entrée de la tubulure (4) ou du raccord tubulaire (7) est ménagée en encoche transversale (20), délimitée par une surface radiale (21), et une première et une deuxième surfaces axiales (22, 23), et en ce qu'un doigt axial d'indexage (24) est porté, respectivement, par le raccord tubulaire (7) ou la tubulure (4), laquelle encoche et lequel doigt (24) sont disposés de façon telle que, lorsque le doigt vient en butée contre une surface axiale (22) de ladite encoche (20) précitée, le raccord (7) est dans sa position de déverrouillage, tandis que lorsque le doigt (24) vient en butée contre l'autre surface axiale (23) de ladite encoche (20), le raccord (7) est dans sa position de verrouillage.

7. Dispositif selon la revendication 5, caractérisé en ce que sur le bord de la tubulure (4) ou du raccord tubulaire (7) est ménagée une encoche transversale (20), délimitée par une surface radiale (21), et une première et une deuxième surfaces axiales (22, 23), et en ce qu'un doigt axial d'indexage est porté, respectivement, par le raccord tubulaire (7) ou la tubulure (4), laquelle encoche (20), lequel doigt (24), sont disposés de façon telle que lorsque le doigt vient en butée contre l'une quelconque des surfaces axiales (22, 23) de ladite encoche (20), le raccord est dans sa position de déverrouillage, tandis que, lorsque le doigt (24) se trouve en une position médiane (à la même distance) desdites surfaces axiales (22, 23) de l'encoche (20), le raccord est dans sa position de verrouillage.

8. Dispositif selon l'une quelconque des revendications 4 ou 5, caractérisé en ce que la tubulure comporte un bossage (27) destiné à coopérer avec un ergot (28) du raccord supportant un doigt d'indexage amovible (29) destiné à être logé dans le bossage précité, ledit bossage et ledit ergot étant agencés de manière telle que, lorsqu'ils sont alignés axialement, le raccord (7) est dans sa position de verrouillage, tandis que le raccord est dans sa position de déverrouillage lorsque l'ergot vient en butée contre l'une quelconque de deux saillies radiales (30a ou 30b), ménagées de part et d'autre par rapport à la position de verrouillage, par rotation du raccord après avoir enlevé le doigt d'indexage (29) de l'ergot (28) et l'avoir retiré du bossage (27).

## Ansprüche

1. Zusammensetzungsvorrichtung als Wärmeaustauscher/röhrenförmiger Anschluß, bei welcher der röhrenförmige Anschluß (7), der sich in einen Stutzen (4) eines Wassergefäßes (3) des Austauschers öffnet, einerseits verbunden ist mit einem weichem Schlauch (31) mittels einer festen Verknüpfung, und andererseits mit dem Stutzen (4) mittels einer elastischen Verknüpfung, dargestellt durch die Zusammenarbeit zwischen einer ringförmigen Rille (6), die in dem Anschluß (7) angeordnet ist, und einem ringförmigen internen Vorsprung (5), angebracht in dem Stutzen (4) und dazu bestimmt, sich elastisch in dieser Rille (6) zu verhaken wobei die Abdichtung sichergestellt wird durch einen elastomeren Ring (32), vorgesehen zur radialen Komprimierung zwischen dem Stutzen (4) und dem Anschluß (7), wobei die Zusammenfügungsvorrichtung dadurch charakterisiert ist,
   – daß die genannte Rille (6) begrenzt ist auf der Ebene des äußersten Endes des Eingangs des ringförmigen Anschlusses (7) durch einen Sperrvorrichtungs Dichtungsstreifen (8-8-...) (mit internem Vorsprung des Stutzens), der diskontinuierlich ist und dargestellt ist durch Sperrvorrichtungszähne (8) die in gleichen Abständen angeordnet sind auf dem gesamten Umfang des äußeren Endes des vorgenannten Eingangs,
   – daß die Teile (10) der Rille (6) die nicht durch die Sperrvorrichtungszähne (8) begrenzt sind, von diesen getrennt sind, die sich, unter Beinhaltung von axialen Schlitzen (9) ausgehend von dem äußersten Ende des Anschlusses (7), sich im wesentlichen über die ganze Länge der Rille (6) erstrecken, dergestalt, daß das äußerste Ende des Anschlusses (7) geteilt wird in eine Vielzahl von axialen Laschen (11), die elastisch sind in der radialen Richtung und die die genannten Sperrvorrichtungszähne (8) umfassen, ebenso wie eine Vielzahl von zylindrischen Teilen (10) der Führung des Anschlusses (7) in dem Stutzen (4),
   – daß der genannte interne Vorsprung (5) des Stutzens (4) auch selbst diskontinuierlich ist, wie der genannte Sperrvorrichtungs-Dichtungsstreifen (8-8...), und eine erste Vielzahl von axialen Nuten (12) umfasst, ebenso wie eine zweite Vielzahl von axialen Nuten (13), wobei jede Nute (12) der ersten Vielzahl : bestimmt ist zur Passage jeder Lasche (11) mit ihrem Sperrvorrichtungszahn (8), ausgehend von dem Zusammenschluß (7) im Stutzen (4), umfasst ist zwischen zwei Nuten (13) der zweiten Vielzahl, getrennt von diesen letzteren (13) durch vorspringende Vorsprungsteile (14) auf welchen die genannten zylindrischen Teile (10) des röhrenförmigen Anschlusses (7) gleiten, während jede Nute (13) der zweiten Vielzahl es erlaubt, die entsprechende Lasche (11) freizusetzen und also den Anschluß (7) des Stutzens (4) auseinanderzunehmen, durch Rotation dieses Anschlusses darauf zielend die Laschen (11) in eine Position der Abriegelung zu bringen – in welcher sie assoziiert sind mit den genannten Nuten (12) der ersten Vielzahl – zu einer Position der Entriegelung, in welcher sie assoziiert sind mit genannten Nuten (13) der zweiten Vielzahl.

2. Vorrichtung gemäß Anspruch 1, dadurch gekennzeichnet, daß die Sperrvorrichtungszähne (8) eine nahezu zylindrische Oberfläche (16) besitzen und die Nuten (12) der ersten Vielzahl einen Boden mit tronkonischer Oberfläche (15) besitzen, wohingegen die Nuten (13) der zweiten Vielzahl einen Boden mit zylindrischer Oberfläche (15a) besitzen.

3. Vorrichtung gemäß Anspruch 1, dadurch gekennzeichnet, daß die Sperrvorrichtungszähne (8) eine nahezu tronkonische Oberfläche (26) besitzen und die Nuten (12) der ersten Vielzahl einen Boden mit zylindrischer : Oberfläche (15a) besitzen wie die Nuten (13) der zweiten Vielzahl.

4. Vorrichtung gemäß einem der Ansprüche 1 oder 2, dadurch gekennzeichnet, daß der Zahn (8) wenigstens einer elastischen Lasche (11) festgehalten ist, in Abriegelungsposition, zwischen zwei radialen Rippen zur Blockierung (17), und, daß der genannte Zahn (8) auf einer Seite seiner radialen Verriegelungsvorrichtung (18) eine Abschrägung (19) der Freigabe des Zahns (8) besitzt, bei der Passage von der Verriegelungsposition bis zur Entriegelungsposition.

5. Vorrichtung gemäß einem der Ansprüche 1 oder 2, dadurch gekennzeichnet, daß der Zahn (8) wenigstens einer elastischen Lasche (11) eine axiale Verriegelungsoberfläche (34) in Form eines vorspringenden V besitzt, die sich verriegelt in einer Nute (35), gleichermaßen axial in Form eines V wiedereintretend angeordnet in dem internen Vorsprung (5) des Stutzens (4).

6. Vorrichtung gemäß Anspruch 4, dadurch gekennzeichnet, daß auf dem Eingangsrand des Stutzens (4) oder des röhrenförmigen Anschlusses (7) eine transversale Nut (20) angeordnet ist, begrenzt durch eine radiale Oberfläche (21), und eine erste und eine zweite axiale Oberfläche (22, 23), und daß ein axialer Indexfinger (24) getragen wird jeweils durch den röhrenförmigen Anschluß (7) oder den Stutzen (4), wobei die Nut und der Finger (24) in der Weise angeordnet sind daß, wenn der Finger zum Anschlag kommt gegen die andere axiale Oberfläche (23) der genannten Nut (20), der Anschluß (7) in seiner Verriegelungsposition ist.

7. Vorrichtung gemäß Anspruch 5, dadurch gekennzeichnet, daß auf dem Rand des Stutzens (4) oder des röhrenförmigen Anschlusses (7) eine transversale Nut (20) angeordnet ist, begrenzt durch eine radiale Oberfläche (21), und eine erste und zweite axiale Oberfläche (22, 23) und daß ein axialer Indexfinger getragen wird, jeweils durch den röhrenförmigen Anschluß (7) oder den Stutzen (4), wobei Nut (20) und Finger (24) in der Weise angeordnet sind, daß, wenn der Finger zum Anschlag kommt gegen eine der axialen Oberflächen (22, 23) der genannten Nut (20), der Anschluß in seiner Entriegelunsposition ist, wohingegen, wenn der Finger (24) sich in einer mittleren Position (bei gleichem Abstand) von genannten axialen Oberflächen (22, 23) der Nut (20) befindet, der Anschluß in seiner Abriegelungsposition ist.

8. Vorrichtung gemäß einem der Ansprüche 4 oder 5, dadurch gekennzeichnet, daß der Stutzen einen Vorsprung (27) umfasst, der dazu bestimmt ist, mit einem Nasenvorsprung (28) des Anschlusses zu kooperieren, der einen unbeweglichen Indexfinger (29) trägt, dazu bestimmt am vorgenannten Vorsprung befestigt zu sein, wobei genannter Vorsprung und genannter Nasenvorsprung derart angeordnet sind, daß, wenn sie axial angeordnet sind, der Anschluß (7) in seiner Verriegelungsposition ist, wohingegen der Anschluß in seiner Entriegelungsposition ist, wenn der Nasenvorsprung zum Anschlag kommt gegen eine der zwei radialen Vorsprünge (30a oder 30b) angeordnet teilweise und andererseits beidseits mit Bezug auf die Verriegelungsposition, durch Rotation des Anschlusses nach Abheben des Indexfingers (29) vom Nasenvorsprung (28) und Zurückziehen des Vorsprungs (27).

## Claims

1. A heat-exchanger/tubular-connector assembly device, wherein the tubular connector (7), opening into a neck (4) of a water reservoir (3) of the exchanger, is firmly connected, on the one hand to a hose (31) by a fixed connection, and on the other hand to the neck (4) by a resilient connection, constituted by the cooperation between an annular groove (6), which is formed in the connector (7), and an internal annular shoulder (5) formed in the neck (4) and adapted to engage resiliently in this groove (6), the sealing being ensured by an elastomer ring (32) adapted to be compressed radially between the neck (4) and the connector (7), which assembly device is characterised :
    – in that said groove (6) is delimited, at the level of the inlet end of the tubular connector (7), by a flange (8-8-8....) for locking (to the internal shoulder of the neck), which is discontinuous and consists of locking teeth (8) which are spaced uniformly over the whole circumference of the aforesaid inlet end,
    – in that the portions (10) of the groove (6) which are not delimited by the locking teeth (8) are separated from those which comprise them by axial slots (9) extending, starting from the inlet end of the connector (7), substantially over the whole length of the groove (6), in such a manner that the end of the connector (7) is divided into a plurality of axial tongues (11) which are resilient in the radial direction and which comprise said locking teeth (8), and into a plurality of cylindrical portions (10) for guiding the connector (7) in the neck (4),
    – in that said internal annular shoulder (5) of the neck (4) is also discontinuous like said locking flange (8-8-8...), and comprises a first plurality of axial recesses (12) as well as a second plurality of axial recesses (13), each recess (12) of the first plurality being :
    adapted for the passage of each tongue (11) with its locking tooth (8) during the mounting of the connector (7) in the neck (4),
    comprised between two recesses (13) of the second plurality, separated from the latter (13) by projecting portions of shoulder (14) on which portions said cylindrical portions (10) of the tubular connector (7) slide,
    while each recess (13) of the second plurality enables the corresponding tongue (11) to be released and hence the connector (7) to be separated from the neck (4) by rotation of this connector aiming at bringing the tongues (11) from a locking position – in which they are aligned with said recesses (12) of the first plurality – into an unlocking position in which they are aligned with said recesses (13) of the second plurality.

2. A device according to Claim 1, characterised in that the locking teeth (8) have a cylindrical approach surface (16) and the recesses (12) of the first plurality have a bottom with a frustoconical surface (15) while the recesses (13) of the second plurality have a bottom with a cylindrical surface (15a).

3. A device according to Claim 1, characterised in that the locking teeth (8) have a frustoconical approach surface (26) and the recesses (12) of the first plurality have a bottom with a cylindrical surface (15a) like the recesses (13) of the second plurality.

4. A device according to any one of Claims 1 or 2, characterised in that the tooth (8) of at least one resilient tongue (11) is confined, in the locking position, between two radial locking ribs (17), and in that said tooth (8) comprises, at one side of its radial locking surface (18), a chamfer (19) for releasing the tooth (8) on passage from the locking position to the unlocking position.

5. A device according to any one of Claims 1 or 2, characterised in that the tooth (8) of at least one resilient tongue (11) has an axial locking surface (34) in the form of a projecting V which snaps into a recess (35) which is likewise axially in the form of a recessed V formed in the internal shoulder (5) of the neck (4).

6. A device according to Claim 4, characterised in that, formed on the inlet edge of the neck (4) or of the tubular connector (7) there is a transverse recess (20) delimited by a radial surface (21) and a first and a second axial surface (22, 23), and in that an axial indexing finger (24) is carried respectively by the tubular connector (7) or the neck (4), said recess and said finger (24) being arranged in such a manner that, when the finger comes into abutment against one axial surface (22) of said recess (20), the connector (7) is in its unlocking position whereas when the finger (24) comes into abutment against the other axial surface (23) of said recess (20), the connector (7) is in its locking position.

7. A device according to Claim 5, characterised in that, formed on the edge of the neck (4) or of the tubular connector (7) there is a transverse recess (20) delimited by a radial surface (21) and a first and a second axial surface (22, 23), and in that an axial indexing finger is carried respectively by the tubular connector (7) or the neck (4), said recess (20) and said finger (24) being arranged in such a manner that when the finger comes into abutment against either one of the axial surfaces (22, 23) of said recess (20), the connector is in its unlocking position whereas when the finger (24) is in a mid position (at the same distance) between said axial surfaces (22, 23) of the recess (20), the connector is in its locking position.

8. A device according to Claim 4 or 5, characterised in that the neck comprises a protuberance (27) adapted to cooperate with a snug (28) of the connector supporting a removable indexing finger (29) adapted to be accommodated in said protuberance, said protuberance and said snug being adapted in such a manner that when they are aligned axially, the connector (7) is in its locking position whereas the connector is in its unlocking position when the snug comes into abutment against either one of two radial projections (30a or 30b) formed one at each side in relation to the locking position, through rotation of the connector after the indexing finger (29) has been removed from the snug (28) and withdrawn from the protuberance.

## FIG. 1

## FIG. 4

FIG. 2

FIG. 3

FIG.7

FIG.6

FIG.5

FIG.9

FIG.8